(19) Europäisches Patentamt
European Patent Office
Office européen des brevets

(11) **EP 4 583 534 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
*H04R 3/12* (2006.01)    *H04R 5/04* (2006.01)
*G10L 13/02* (2013.01)    *H04M 1/02* (2006.01)

(21) Application number: **24798717.5**

(22) Date of filing: **24.10.2024**

(52) Cooperative Patent Classification (CPC):
**G10L 13/02; H04M 1/02; H04R 3/12; H04R 5/04**

(86) International application number:
**PCT/KR2024/016289**

(87) International publication number:
**WO 2025/100797 (15.05.2025 Gazette 2025/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 06.11.2023  KR 20230151689
             22.12.2023  KR 20230189315

(71) Applicant: **Samsung Electronics Co., Ltd
Suwon-si, Gyeonggi-do 16677 (KR)**

(72) Inventors:
  • **HEO, Seung**
    **Suwon-si, Gyeonggi-do 16677 (KR)**
  • **YANG, Hyunchul**
    **Suwon-si, Gyeonggi-do 16677 (KR)**
  • **KIM, Hyunwook**
    **Suwon-si, Gyeonggi-do 16677 (KR)**
  • **MOON, Hangil**
    **Suwon-si, Gyeonggi-do 16677 (KR)**
  • **PARK, Jaeha**
    **Suwon-si, Gyeonggi-do 16677 (KR)**
  • **BANG, Kyoungho**
    **Suwon-si, Gyeonggi-do 16677 (KR)**
  • **LEE, Sanghoon**
    **Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE FOR COMMUNICATING WITH TWS AND CONTROL METHOD THEREFOR**

(57)    An electronic device is disclosed. An electronic device according to the disclosure may comprise a front camera, a rear camera, a microphone, memory, a communication module, and at least one processor. The memory may store instructions that, when executed by the at least one processor, cause the electronic device to receive a first audio signal from an external electronic device through the communication module, obtain a second audio signal through the microphone, identify whether the first audio signal includes a voice of a user wearing the external electronic device, based on the voice of the user being included in the first audio signal, extract a voice signal of the user, included in the first audio signal, and change the second audio signal using the voice signal of the user, and based on the voice of the user being not included in the first audio signal, identify whether the front camera or the rear camera operates and, based on an operation of the front camera or the rear camera, emphasize an ambient audio signal included in the second audio signal or control a weight of the second audio signal.

EP 4 583 534 A1

START

RECEIVE FIRST AUDIO SIGNAL FROM
EXTERNAL ELECTRONIC DEVICE — 510

OBTAIN SECOND AUDIO SIGNAL THROUGH MICROPHONE — 520

IDENTIFY WHETHER FIRST AUDIO SIGNAL INCLUDES VOICE
OF USER WEARING EXTERNAL ELECTRONIC DEVICE — 530

BASED ON USER VOICE BEING INCLUDED IN FIRST AUDIO
SIGNAL, EXTRACT USER'S VOICE SIGNAL INCLUDED IN
FIRST AUDIO SIGNAL AND CHANGE SECOND AUDIO
SIGNAL USING USER'S VOICE SIGNAL — 540

BASED ON USER VOICE BEING NOT INCLUDED IN
FIRST AUDIO SIGNAL, EMPHASIZE AMBIENT AUDIO SIGNAL
INCLUDED IN SECOND AUDIO SIGNAL OR CONTROL WEIGHT OF
SECOND AUDIO SIGNAL BASED ON OPERATION
OF FRONT CAMERA OR REAR CAMERA — 550

END

FIG. 5

**Description**

**[Technical Field]**

Various embodiments of the disclosure relate to an electronic device communicating with a TWS and a method for controlling the same.

**[Background Art]**

More and more services and additional functions are being provided through electronic devices, e.g., smartphones, or other portable electronic devices. To meet the needs of various users and raise use efficiency of electronic devices, communication service carriers or device manufacturers are jumping into competitions to develop electronic devices with differentiated and diversified functionalities. Accordingly, various functions that are provided through electronic devices are evolving more and more.

Such an electronic device may be connected to an external device such as a notebook computer, an earphone, or a headphone to exchange information using a short-range wireless technology such as Bluetooth. For example, the electronic device may be connected to an earphone via Bluetooth to output the sound of music or a video through the earphone.

Earphones come in the form of a true wireless stereo (TWS) type wireless headset (or wireless input/output device) that may be inserted into the user's ears to reflect the needs of the user. The wireless headset includes a microphone in each of the left and right units to be capable of binaural recording and more realistic sound recording.

The above-described information may be provided as related art for the purpose of helping understanding of the disclosure. No claim or determination is made as to whether any of the foregoing is applicable as background art in relation to the disclosure.

**[Disclosure of Invention]**

**[Solution to Problems]**

According to an embodiment, an electronic device may comprise a front camera, a rear camera, a microphone, a communication module comprising communication circuitry, at least one processor comprising processing circuitry and memory storing instructions that, when executed by the at least one processor, cause the electronic device to perform operations below.

According to an embodiment, the memory may store instructions that, when executed by the at least one processor, cause the electronic device to receive a first audio signal from an external electronic device through the communication module.

According to an embodiment, the instructions, when executed by the at least one processor, cause the electronic device to obtain a second audio signal through the microphone.

According to an embodiment, the instructions, when executed by the at least one processor, cause the electronic device to identify whether the first audio signal includes a voice of a user wearing the external electronic device.

According to an embodiment, the instructions, when executed by the at least one processor, cause the electronic device to, based on the voice of the user being included in the first audio signal, extract a voice signal of the user, included in the first audio signal.

According to an embodiment, the instructions, when executed by the at least one processor, cause the electronic device to, based on the voice of the user being included in the first audio signal, change the second audio signal using the voice signal of the user.

According to an embodiment, the instructions, when executed by the at least one processor, cause the electronic device to, based on the voice of the user being not included in the first audio signal, identify whether the front camera or the rear camera operates.

According to an embodiment, the instructions, when executed by the at least one processor, cause the electronic device to, based on an operation of the front camera or the rear camera, emphasize an ambient audio signal included in the second audio signal or control a weight of the second audio signal.

According to an embodiment, a method for controlling an electronic device may comprise receiving a first audio signal from an external electronic device through a communication module of the electronic device.

According to an embodiment, the method for controlling the electronic device may comprise obtaining a second audio signal through a microphone of the electronic device.

According to an embodiment, the method for controlling the electronic device may comprise identifying whether the first audio signal includes a voice of a user wearing the external electronic device.

According to an embodiment, the method for controlling the electronic device may comprise, based on the user's voice being included in the first audio signal, extracting the user's voice signal included in the first audio signal.

According to an embodiment, the method for controlling the electronic device may comprise, based on the user's voice being included in the first audio signal, changing the second audio signal using the user's voice signal.

According to an embodiment, the method for controlling the electronic device may comprise, based on the user's voice being not included in the first audio signal, identifying whether a front camera or a rear camera operates.

According to an embodiment, the method for controlling the electronic device may comprise, based on the user's voice being not included in the first audio signal, emphasizing an ambient audio signal included in the second audio signal or controlling a weight of the second audio signal based on an operation of the front camera or the rear camera.

According to an embodiment, in a non-transitory computer-readable recording medium storing one or more programs, the one or more programs may store instructions enabling an electronic device to receive a first audio signal from an external electronic device through a communication module of the electronic device.

According to an embodiment, the one or more programs may store instructions enabling the electronic device to obtain a second audio signal through a microphone of the electronic device.

According to an embodiment, the one or more programs may store instructions enabling the electronic device to identify whether the first audio signal includes a voice of a user wearing the external electronic device.

According to an embodiment, the one or more programs may store instructions enabling the electronic device to, based on the voice of the user being included in the first audio signal, extract a voice signal of the user, included in the first audio signal.

According to an embodiment, the one or more programs may store instructions enabling the electronic device to, based on the voice of the user being included in the first audio signal, change the second audio signal using the voice signal of the user.

According to an embodiment, the one or more programs may store instructions enabling the electronic device to, based on the voice of the user being not included in the first audio signal, identify whether a front camera of the electronic device or a rear camera of the electronic device operates.

According to an embodiment, the one or more programs may store instructions enabling the electronic device to, based on the voice of the user being not included in the first audio signal, emphasize an ambient audio signal included in the second audio signal or control a weight of the second audio signal based on an operation of the front camera or the rear camera.

**[Brief Description of Drawings]**

FIG. 1 is a block diagram illustrating an electronic device in a network environment according to an embodiment;
FIG. 2 is a block diagram illustrating an audio module according to an embodiment of the disclosure;
FIG. 3 is a view illustrating a network environment between an electronic device and an external electronic device according to an embodiment of the disclosure;
FIG. 4 is a block diagram illustrating an external electronic device according to an embodiment of the disclosure; For example, the external electronic device may be a wearable electronic device including a TWS;
FIG. 5 is a flowchart schematically illustrating an operation of processing an audio signal by an electronic device according to an embodiment;
FIG. 6 is a flowchart illustrating an operation in which an electronic device processes an audio signal according to a condition according to an embodiment of the disclosure;
FIG. 7 is a view illustrating an operation of identifying whether a user voice is included in an audio signal based on a TWS of an electronic device according to an embodiment of the disclosure;
FIG. 8 is a view illustrating an audio signal processing operation according to whether a user utters and whether a front/rear camera operates by an electronic device according to an embodiment of the disclosure;
FIG. 9 is a view illustrating an audio signal processing operation according to whether a user utters and whether a front/rear camera operates by an electronic device according to an embodiment of the disclosure; and
FIG. 10 is a view illustrating an audio signal processing operation according to whether a user utters and whether a front/rear camera operates by an electronic device according to an embodiment of the disclosure.

**[Mode for the Invention]**

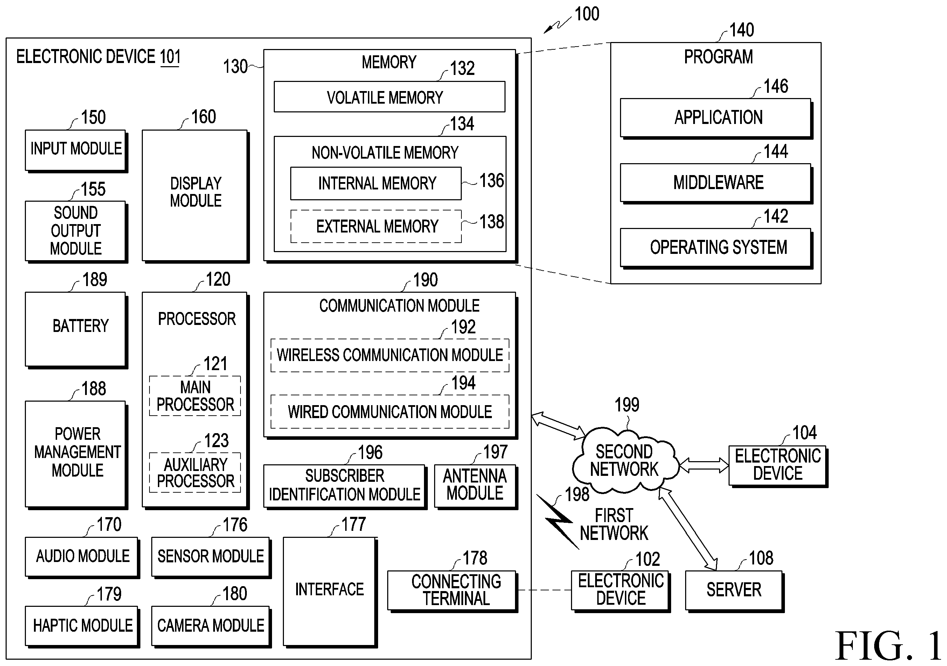

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment,

# EP 4 583 534 A1

the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The Interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

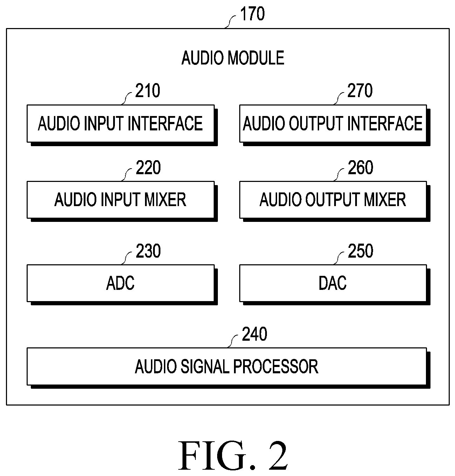

FIG. 2 is a block diagram illustrating an audio module 170 according to an embodiment. Referring to FIG. 2, the audio module 170 may include, for example, an audio input interface 210, an audio input mixer 220, an analog-to-digital converter (ADC) 230, an audio signal processor 240, a digital-to-analog converter (DAC) 250, an audio output mixer 260, or an audio output interface 270.

The audio Input Interface 210 may receive an audio signal corresponding to a sound obtained from the outside of the electronic device 101 via a microphone (e.g., a dynamic microphone, a condenser microphone, or a piezo microphone) that is configured as part of the input module 150 or separately from the electronic device 101. For example, if an audio signal is obtained from the external electronic device 102 (e.g., a headset or a microphone), the audio input interface 210 may be connected with the external electronic device 102 directly via the connecting terminal 178, or wirelessly (e.g., BluetoothTM communication) via the wireless communication module 192 to receive the audio signal. According to an embodiment, the audio input interface 210 may receive a control signal (e.g., a volume adjustment signal received via an input button) related to the audio signal obtained from the external electronic device 102. The audio input interface 210 may include a plurality of audio input channels and may receive a different audio signal via a corresponding one of the plurality of audio input channels, respectively. According to an embodiment, additionally or alternatively, the audio input interface 210 may receive an audio signal from another component (e.g., the processor 120 or the memory 130) of the electronic device 101.

The audio Input mixer 220 may synthesize a plurality of Inputted audio signals Into at least one audio signal. For example, according to an embodiment, the audio input mixer 220 may synthesize a plurality of analog audio signals inputted via the audio input interface 210 into at least one analog audio signal.

The ADC 230 may convert an analog audio signal into a digital audio signal. For example, according to an embodiment, the ADC 230 may convert an analog audio signal received via the audio input interface 210 or, additionally or alternatively, an analog audio signal synthesized via the audio input mixer 220 into a digital audio signal.

The audio signal processor 240 may perform various processing on a digital audio signal received via the ADC 230 or a digital audio signal received from another component of the electronic device 101. For example, according to an embodiment, the audio signal processor 240 may perform changing a sampling rate, applying one or more filters, interpolation processing, amplifying or attenuating a whole or partial frequency bandwidth, noise processing (e.g., attenuating noise or echoes), changing channels (e.g., switching between mono and stereo), mixing, or extracting a specified signal for one or more digital audio signals. According to an embodiment, one or more functions of the audio signal processor 240 may be implemented in the form of an equalizer.

The DAC 250 may convert a digital audio signal into an analog audio signal. For example, according to an embodiment, the DAC 250 may convert a digital audio signal processed by the audio signal processor 240 or a digital audio signal obtained from another component (e.g., the processor(120) or the memory(130)) of the electronic device 101 into an analog audio signal.

The audio output mixer 260 may synthesize a plurality of audio signals, which are to be outputted, into at least one audio signal. For example, according to an embodiment, the audio output mixer 260 may synthesize an analog audio signal converted by the DAC 250 and another analog audio signal (e.g., an analog audio signal received via the audio input interface 210) into at least one analog audio signal.

The audio output Interface 270 may output an analog audio signal converted by the DAC 250 or, additionally or alternatively, an analog audio signal synthesized by the audio output mixer 260 to the outside of the electronic device 101 via the sound output module 155. The sound output module 155 may include, for example, a speaker, such as a dynamic driver or a balanced armature driver, or a receiver. According to an embodiment, the sound output module 155 may include a plurality of speakers. In such a case, the audio output interface 270 may output audio signals having a plurality of different channels (e.g., stereo channels or 5.1 channels) via at least some of the plurality of speakers. According to an embodiment, the audio output interface 270 may be connected with the external electronic device 102 (e.g., an external speaker or a headset) directly via the connecting terminal 178 or wirelessly via the wireless communication module 192 to output an audio signal.

According to an embodiment, the audio module 170 may generate, without separately including the audio input mixer 220 or the audio output mixer 260, at least one digital audio signal by synthesizing a plurality of digital audio signals using at least one function of the audio signal processor 240.

According to an embodiment, the audio module 170 may include an audio amplifier (not shown) (e.g., a speaker amplifying circuit) that is capable of amplifying an analog audio signal inputted via the audio input interface 210 or an audio signal that is to be outputted via the audio output interface 270. According to an embodiment, the audio amplifier may be configured as a module separate from the audio module 170.

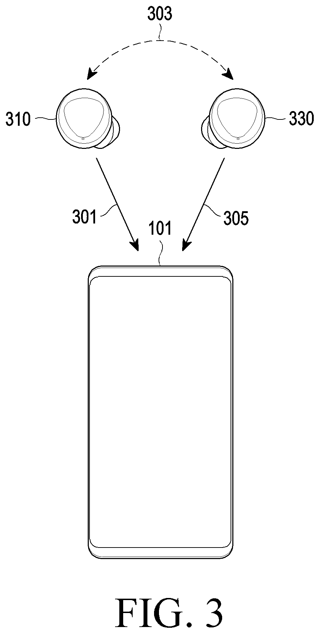

FIG. 3 is a view illustrating a network environment between an electronic device and an external electronic device according to an embodiment of the disclosure.

Referring to FIG. 3, an electronic device 101 (e.g., the electronic device 101 of FIG. 1) may be connected to external electronic devices 310 and 330. The external electronic devices 310 and 330 may include a first device 310 and a second device 330 separated on the left and right sides in a TWS manner.

According to an embodiment, the first device 310 may establish a first communication link 301 with the electronic device 101, and the second device 330 may establish a third communication link 305 with the electronic device 101. For example, a second communication link 303 may be established (or connected) between the first device 310 and the second device 330. The first communication link 301 and the third communication link 305 may be the same or similar communication methods. A method in which the electronic device 101, the first device 310, and the second device 330 each establish a communication link may be referred to as an independent link scheme.

According to an embodiment, the second communication link 303 may be used for transmitting/receiving control signals and information between the first device 310 and the second device 330, and may not be used for data packet delivery. The first device 310 may transmit first audio data (e.g., audio packet1) obtained by itself to the electronic device 101 through the first communication link 301, and the second device 330 may transmit second audio data (e.g., audio packet2) obtained by itself to the electronic device 101 through the third communication link 305. The electronic device 101 may synchronize the first audio data and the second audio data based on the index numbers included in the first audio data and the second audio data and store the synchronized first audio data and second audio data in the memory 130. The electronic device 101 may output the first audio data and the second audio data through the sound output module 155.

According to an embodiment, the electronic device 101 and the external electronic devices 310 and 330 may perform communication connection in schemes other than the independent link scheme.

According to an embodiment, the first device 310 may establish the first communication link 301 with the electronic device 101, may establish (or connect) the second communication link 303 with the second device 330, may transmit information (e.g., first communication link information) about the first communication link 301 to the second device 330, and the second device 330 may establish (or connect) the third communication link 305 with the electronic device 101 based on the first communication link information. This may be referred to as a sniffing scheme.

According to an embodiment, the first communication link information may include information for connecting to the first communication link 301, such as the Bluetooth address, FHS packet information, or the link key. For example, the first communication link 301 and the third communication link 305 may be the same channel or the same communication scheme. The second device 330 may receive (e.g., sniff) information (or packet) transmitted/received between the first device 310 and the electronic device 101 through the third communication link 305. For example, the electronic device 101 may recognize the first device 310 connected through the first communication link 301 and the second device 330 connected through the third communication link 305 as the same device.

According to an embodiment, the second communication link 303 may be used for transmitting/receiving control signals and information between the first device 310 and the second device 330, and may not be used for data packet delivery. The first device 310 may transmit the first audio data (e.g., audio packet1) obtained by itself to the electronic device 101 through the first communication link 301, and the second device 330 may directly transmit the second audio data (e.g., audio packet2) obtained by itself to the electronic device 101 through the third communication link 305. The first device 310 and the second device 330 may transmit audio data obtained by the first device 310 and the second device 330 to the electronic device 101 through the first communication link 301 or the third communication link 305, respectively. The electronic device 101 may synchronize the first audio data and the second audio data based on the index numbers included in the first audio data and the second audio data and store the synchronized first audio data and second audio data in the memory 130. The electronic device 101 may output the first audio data and the second audio data through the sound output module 155.

According to an embodiment, the electronic device 101 may be connected not to both the first device 310 and the second device 330, but either the first device 310 or the second device 330.

According to an embodiment, the first device 310 may be a primary equipment (PE) device capable of directly communicating with the electronic device 101, and the second device 330 may be a secondary equipment (SE) device not directly communicating with the electronic device 101.

According to an embodiment, when the first device 310 is a PE device and the second device 330 is an SE device, the first device 310 may establish a first communication link 301 with the electronic device 101 and may establish (or connect) a second communication link 303 with the second device 330. This may be referred to as a relay scheme.

According to an embodiment, when the communication connection is performed in the relay scheme, the first communication link 301 and the second communication link 303 may be different links (or channels) or may be different communication schemes. For example, the first communication link 301 may be connected in a Bluetooth scheme, and the second communication link 303 may be connected in a Bluetooth low energy scheme.

According to an embodiment, the second device 330 may transmit the second audio data (e.g., audio packet2) obtained by itself to the first device 310 through the second communication link 303. For example, the first device 310 may synchronize the first audio data (e.g., audio packet1) obtained by itself with the second audio data obtained from the second device 330 (e.g., audio packet1 + audio packet2) and may transmit the synchronized first audio data to the electronic device 101 through the first communication link 301. For example, the electronic device 101 may store the received first audio data and second audio data in memory (e.g., the memory 130 of FIG. 1). Alternatively, e.g., the electronic device 101 may synchronize and store the first audio data and the second audio data based on the index numbers included in the respective audio data. For example, the electronic device 101 may output the first audio data and the second audio data through a speaker (e.g., the sound output module 155 of FIG. 1).

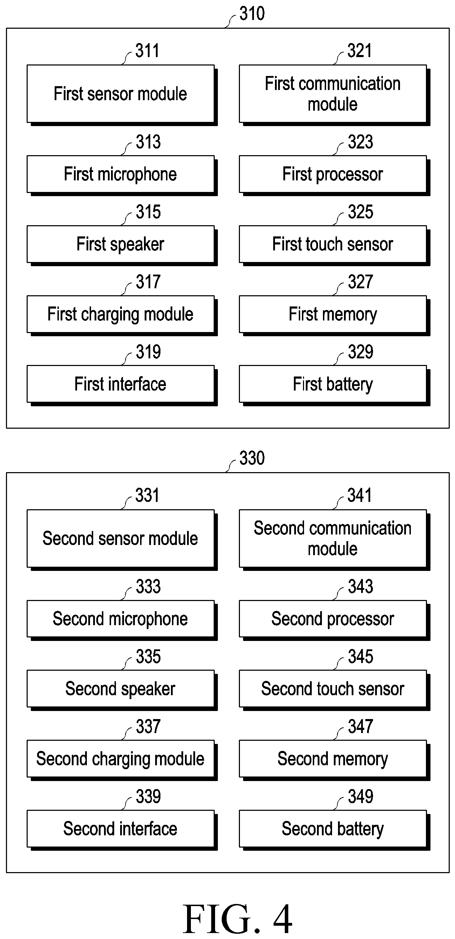

FIG. 4 is a block diagram illustrating an external electronic device according to an embodiment of the disclosure. For example, the external electronic device may be a wearable electronic device including a TWS.

Referring to FIG. 4, an external electronic device (e.g., the wearable electronic device 200 of FIG. 2) according to various embodiments may include at least one of a first device (e.g., the first device 310 of FIG. 3), a second device (e.g., the second device 330 of FIG. 3), and a case. Hereinafter, the external electronic device described in the disclosure may mean the first device 310 or the second device 330.

According to an embodiment, the first device 310 may include at least one of a first sensor module 311, a first microphone 313, a first speaker 315, a first charging module 317, a first interface 319, a first communication module 321, a first processor 323, a first touch sensor 325, a first memory 327, or a first battery 329. According to an embodiment, at least one of these components may be omitted from the first device 310, or one or more other components may be added to the first device 310. In an embodiment, some of these components may be integrated into one component.

According to an embodiment, the first sensor module 311 is used to determine whether the first device 310 is worn, and may include at least one of a proximity sensor, a touch sensor, an acceleration sensor, or a gyro sensor. For example, the first sensor module 311 may be a proximity sensor or a touch sensor that detects an object approaching the first device 310. For example, when the first sensor module 311 is a proximity sensor or a touch sensor, the first sensor module 311 may be disposed in an area inserted into the user's ear. Alternatively, the first sensor module 311 may be an acceleration sensor that measures dynamic force such as acceleration, vibration, and impact of an object. Alternatively, the first sensor module 311 may be a gyro sensor that measures the angular velocity of an object.

According to an embodiment, the first microphone 313 may convert a sound into an electrical signal. According to an embodiment, the first microphone 313 may obtain a sound (or audio) and convert the sound into an electrical signal.

According to an embodiment, the first microphone 313 may include an external microphone capable of receiving an external sound and an internal microphone capable of receiving a sound (e.g., reverberation or echo) reflected from the ear portion of the user. The first speaker 315 may convert an electrical signal into sound. The first speaker 315 may output an audio (or sound) signal to the outside of the first device 310. For example, the first speaker 315 may include a receiver. The first speaker 315 may be used for general purposes, such as multimedia playback or recording playback. The receiver may be used for receiving incoming calls. According to an embodiment, the receiver may be implemented separately from or as a part of the first speaker 315. According to an embodiment, the number of first microphones 313 and the number of first speakers 315 may be changed to various numbers as necessary.

According to an embodiment, the first charging module 317 may manage power supplied to the first device 310. For example, the first charging module 317 may charge the first battery 329 with power received through the first interface 319. The first charging module 317 may be implemented as at least part of a power management integrated circuit (PMIC). The first interface 319 may include a connector through which the first device 310 may be physically connected to the case 350.

According to an embodiment, the first communication module 321 may establish a wireless communication channel with an external electronic device (e.g., the electronic device 101 or the second device 330 of FIG. 1) and may support communication through the established communication channel. The first communication module 321 may be connected to an external electronic device or may be connected to an access point or a network through Bluetooth, low-power Bluetooth, Wi-Fi, ANT+ (adaptive network topology), long term evolution (LTE), 5th generation mobile communication (5G), or narrowband internet of things (NB-IoT). The first communication module 321 may receive an acoustic signal from an external electronic device or may transmit sensing information (or a sensing signal) or an acoustic signal to the external electronic device.

According to an embodiment, the first processor 323 may execute software to control at least one other component (e.g., a hardware or software component) of the first device 310 connected to the first processor 323, and may perform various data processing or computations. According to an embodiment, as at least part of data processing or computations, the first processor 323 may store a command or data received from another component (e.g., the first sensor module 311 or the first communication module 321) in the first memory 327, process the command or the data stored in the first memory 327, and store resulting data in the first memory 327. According to an embodiment, the first processor 323 may include a main processor (e.g., a central processing unit (CPU) or an application processor) or an auxiliary processor (e.g., a sensor hub processor or a communication processor) operable independently from, or in conjunction with, the main processor. For example, when the first device 310 includes a main processor and an auxiliary processor, the auxiliary processor may be configured to use lower power than the main processor or to be specialized for a designated function. The auxiliary processor may be implemented separately from or as part of the main processor.

According to an embodiment, the first processor 323 may connect the first communication link with the electronic device 101 and may connect the second communication link with the second device 330. For example, the first communication link and the second communication link may be different links (or channels) or may be connected in different communication schemes. The first processor 323 may transmit information (e.g., the Bluetooth address, filesystem hierarchy system (FHS) packet information, or a link key) about the first communication link to the second device 330. For example, when the first processor 323 receives a recording instruction from the electronic device 101, the first processor 323 may instruct the second device 330 to open the microphone. The first processor 323 may instruct the second device 330 to operate the microphone (or microphone open command), and when a predetermined time elapses, the first processor 323 may operate the first microphone 313 to receive (or obtain) audio. In an embodiment, the first processor 323 may monitor (or analyze) a transmission environment (or a wireless transmission environment) by exchanging a transmission buffer state or a signal strength with the second device 330. The transmission buffer state may refer to the current remaining buffer space of the controller transmission buffer of the first device 310 or the current remaining buffer space of the controller transmission buffer of the second device 330. The signal strength may include a signal strength (e.g., a receiver signal strength indicator (RSSI)) of the first device 310 or a signal strength of the second device 330.

According to an embodiment, the first processor 323 may determine a bit rate of audio based on the transmission environment. For example, when the transmission buffer state is less than or equal to a first threshold or the signal strength exceeds a signal threshold, the first processor 323 may determine that it is a strong electric field (e.g., a state in which the transmission environment is good) and determine a first bit rate. Alternatively, when the transmission buffer state exceeds the first threshold or the signal strength is less than or equal to the signal threshold, the first processor 323 may determine that it is a weak electric field (e.g., a state in which the transmission environment is bad) and determine a second bit rate. The first bit rate may be larger than the second bit rate. In an embodiment, when the bit rate is determined, the first processor 323 may determine a packet type based on the determined bit rate. The first processor 323 may encode and store audio based on the determined bit rate. The first processor 323 may encode audio by assigning the same index number (or index value, index information) as the second device 330 to the audio obtained at the same time as the second device 330. The first processor 323 may transmit the stored first audio data (or audio packet) to the electronic device 101 or may transmit the stored first audio data together with the second audio data obtained from the second device 330 to the electronic device 101.

According to an embodiment, the first touch sensor 325 may be a sensor for controlling the first device 310. For example, when a touch is detected by the first touch sensor 325 while the first device 310 outputs a sound, the first device 310 may stop playback. After the playback is stopped, when a touch is detected by the first touch sensor 325, the first device 310 may start playback. For example, the first touch sensor 325 may be disposed in an external area of the first device 310 that is not inserted into the user's ear to receive a touch input while the user wears the first device 310. The touch input may include, e.g., a single touch, multi-touch, a swipe, or a flick. In an embodiment, touch recognition through the first touch sensor 325 may be performed in various ways. For example, a touch input may be recognized by at least one of a capacitive type, a resistive type, an infrared type, or an ultrasonic type. According to an embodiment, the first device 310 may include a physical button or an optical key.

According to an embodiment, the first memory 327 (or buffer) may store various data used by at least one component (e.g., the first sensor module 311 or the first processor 323) of the first device 310. The various data may include, for example, software (e.g., the program) and input data or output data for a command related thereto.

According to an embodiment, the first battery 329 may supply power to at least one component of the first device 310. According to an embodiment, the first battery 329 may include a primary cell which is not rechargeable, a secondary cell which is rechargeable, or a fuel cell.

According to an embodiment, the second device 330 may include at least one of a second sensor module 331, a second microphone 333, a second speaker 335, a second charging module 337, a second interface 339, a second communication module 341, a second processor 343, a second touch sensor 345, second memory 347, or a second battery 349. In an embodiment, at least one of these components may be omitted from the second device 330, or one or more other components may be added to the second device 330. In an embodiment, some of these components may be integrated into one component. Since the components included in the first device 310 and the components included in the second device 330 are the same or similar, "first" and "second" may be added before the components to distinguish them. The same components as those of the first device 310 are briefly described.

According to an embodiment, the second sensor module 331 may be used to determine whether the second device 320 is worn, and may include at least one of a proximity sensor, a touch sensor, an acceleration sensor, or a gyro sensor. The second microphone 333 may convert a sound into an electrical signal. The second speaker 335 may convert an electrical signal into sound. The second speaker 335 may output an audio (or sound) signal to the outside of the second device 330. The second speaker 335 may include a receiver. The second speaker 335 may be used for general purposes, such as multimedia playback or recording playback. The receiver may be used for receiving incoming calls. According to an embodiment, the receiver may be implemented separately from or as a part of the second speaker 335.

According to an embodiment, the second charging module 337 may manage power supplied to the second device 330 as at least a part of the PMIC. The second charging module 337 may charge the second battery 349 with power received through the second interface 339. The second interface 339 may include a connector through which the second device 330 may be physically connected to the case 350.

According to an embodiment, the second communication module 341 may establish a wireless communication channel with an external electronic device (e.g., the electronic device 101 or the first device 310 of FIG. 1) and may support communication through the established communication channel. The second communication module 341 may receive an acoustic signal from an external electronic device or may transmit sensing information (or a sensing signal) or an acoustic signal to the external electronic device.

According to an embodiment, the second processor 343 may execute software to control at least one other component (e.g., a hardware or software component) of the second device 330 connected to the second processor 343, and may perform various data processing or computations. According to various embodiments, the second processor 343 may connect the second communication link with the first device 310 or may connect the first communication link with the electronic device 101 based on the first communication link information received from the first device 310. When the second processor 343 receives a microphone open instruction (or a microphone open instruction) from the first device 310, the second processor 343 may open the second microphone 333 to receive (or obtain) audio after a predetermined time elapses. The second processor 343 may monitor (or analyze) a transmission environment (or a wireless transmission environment) by exchanging a transmission buffer state or a signal strength with the first device 310. The transmission buffer state may refer to the current remaining buffer space of the controller transmission buffer of the first device 310 or the current remaining buffer space of the controller transmission buffer of the second device 330. The signal strength may include a signal strength (e.g., RSSI) of the first device 310 or a signal strength of the second device 330.

According to an embodiment, the second processor 343 may determine the bit rate of the audio based on the transmission environment. For example, when the transmission buffer state is less than or equal to a first threshold or the signal strength exceeds a signal threshold, the second processor 343 may determine that it is a strong electric field (e.g., a state in which the transmission environment is good) and determine a first bit rate. Alternatively, when the transmission buffer state exceeds the first threshold or the signal strength is less than or equal to the signal threshold, the second processor 343 may determine that it is a weak electric field (e.g., a state in which the transmission environment is bad) and determine a second bit rate. The first bit rate may be larger than the second bit rate. When the bit rate is determined, the second processor 343 may determine a packet type based on the determined bit rate. The second processor 343 may encode and store audio based on the determined bit rate. The second processor 343 may encode audio by assigning the same index number (or index value, or index information) as the first device 310 to the audio obtained at the same time as the first device 310. The second processor 343 may transmit the stored second audio data (or audio packet) to the first device 310 or the electronic device 101.

According to an embodiment, the second touch sensor 345 may be a sensor for controlling the second device 330. For example, when a touch is detected by the second touch sensor 345 while the second device 330 outputs a sound, the second device 330 may stop playback. After the playback is stopped, when a touch is detected by the second touch sensor 345, the second device 330 may start playback. The second memory 347 (or buffer) may store various data used by at least one component (e.g., the second sensor module 331 or the second processor 343) of the second device 330. The various data may include, for example, software (e.g., the program) and input data or output data for a command related thereto. The second battery 349 may supply power to at least one component of the second device 330.

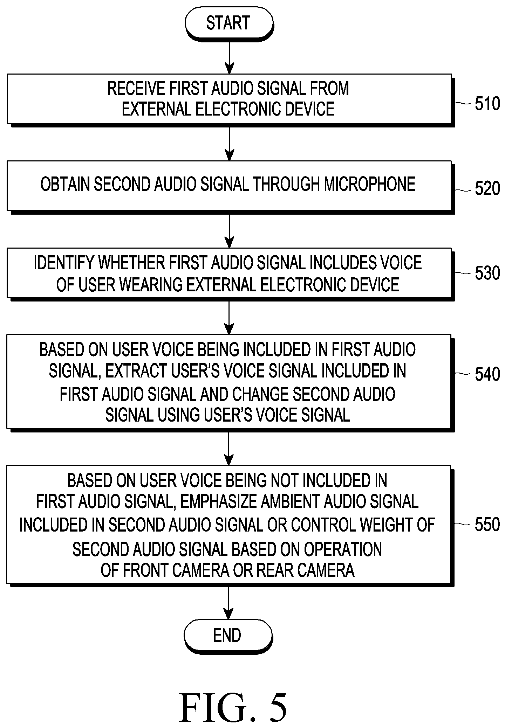

FIG. 5 is a flowchart schematically illustrating an operation of processing an audio signal by an electronic device according to an embodiment.

Referring to FIG. 5, in operation 510, an electronic device (e.g., the electronic device 101 of FIG. 1, the processor 120 of FIG. 1, or the electronic device 101 of FIG. 3) receives a first audio signal from an external electronic device (e.g., the electronic device 104 of FIG. 1 or the external electronic devices 310 and 330 of FIG. 3).

According to an embodiment, the external electronic device may be a wearable electronic device that performs wireless communication (e.g., Bluetooth communication) with the electronic device. For example, the external electronic device may be a true wireless stereo (TWS) such as a wireless earphone in which left and right sides are separated.

According to an embodiment, the electronic device receives the first audio signal from the external electronic device when a video recording function or a video call function is performed while the user wears the external electronic device connected for wireless communication.

According to an embodiment, the external electronic device includes an internal microphone disposed inside and/or an external microphone disposed outside. According to an embodiment, the external electronic device generates a first audio signal by merging the audio signal obtained from the internal microphone and the audio signal obtained from the external microphone. According to an embodiment, the external electronic device transmits the first audio signal to the electronic device.

According to an embodiment, the external electronic device may include a voice pickup unit (VPU). According to an embodiment, the VPU is a technology for separating the user's voice from the ambient audio, and the external electronic device may include an acceleration sensor for detecting the vibration of the vocal cord of the user, based on vibrations of bones and tissues of the head of the user.

According to an embodiment, the electronic device may receive information detected by the acceleration sensor (or VPU) of the external electronic device. According to an embodiment, the electronic device may receive the first audio signal and information detected by the acceleration sensor from the external electronic device. According to an embodiment, the information detected by the acceleration sensor may include a sensing value detected by the acceleration sensor of the external electronic device in a time period when the first audio signal is obtained by the microphone of the external electronic device. According to an embodiment, the information detected by the acceleration sensor may include information about a section in which the vocal cords are identified as vibrating among sensing values detected by the acceleration sensor.

According to an embodiment, the electronic device may receive, from the external electronic device, a user voice signal extracted from the first audio signal by the external electronic device (e.g., the VPU).

According to an embodiment, in operation 520, the electronic device obtains a second audio signal through a microphone (e.g., the input module 150 of FIG. 1).

According to an embodiment, the second audio signal may be obtained independently of the first audio signal. According to an embodiment, the second audio signal may be obtained in the same time period as the first audio signal.

According to an embodiment, the electronic device may synchronize the first audio signal with the second audio signal based on the delay generated by the reception of the first audio signal. For example, the electronic device may synchronize them with respect to the time point of the first audio signal and the time point of the second audio signal, which are identified as the same sound (e.g., user voice or ambient sound) by comparing the waveform of the first audio signal with the waveform of the second audio signal.

According to an embodiment, in operation 530, the electronic device identifies whether the voice of the user wearing the external electronic device is included in the first audio signal.

According to an embodiment, the electronic device may identify the first portion including the user's voice in the first audio signal obtained through the microphone of the external electronic device, based on the information detected by the acceleration sensor of the external electronic device.

According to an embodiment, the electronic device may identify whether the vocal cords of the user vibrate and the section in which the vocal cords of the user vibrate, based on the sensing value detected by the acceleration sensor of the external electronic device.

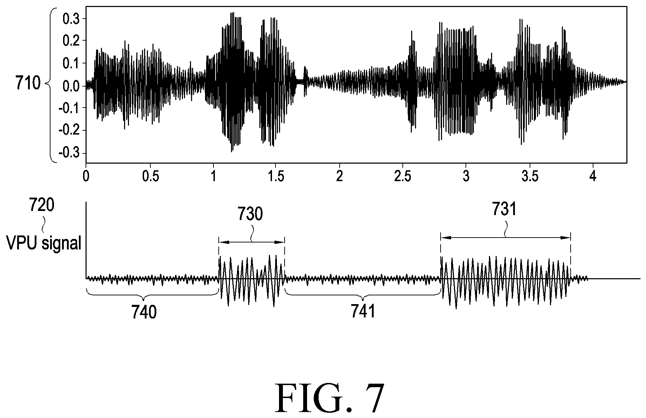

According to an embodiment, as illustrated in FIG. 7, the electronic device may identify a section corresponding to the section in which the vocal cords of the user vibrate in the first audio signal as the section including the user voice. According to an embodiment, when there is no section identified as the section in which the vocal cords of the user vibrate in the sensing value detected by the acceleration sensor of the external electronic device, the electronic device may identify that the user voice is not included in the first audio signal.

FIG. 7 is a view illustrating an operation of identifying whether a user voice is included in an audio signal based on a TWS of an electronic device according to an embodiment of the disclosure.

Referring to FIG. 7, an electronic device (e.g., the electronic device 101 of FIG. 1, the processor 120 of FIG. 1, or the electronic device 101 of FIG. 3) may receive a first audio signal 710 and a VPU signal 720 from an external electronic device (e.g., the electronic device 104 of FIG. 1 or the external electronic devices 310 and 330 of FIG. 3). According to an embodiment, the VPU signal 720 may be a sensing value sensed by the acceleration sensor of the external electronic device.

According to an embodiment, the electronic device may identify sections 730 and 731 in which the vocal cords of the user vibrate based on the VPU signal 720. For example, the electronic device may identify the sections of the VPU signal 720 that has a set value or more as the sections 730 and 731 in which the vocal cords of the user vibrate.

According to an embodiment, the electronic device may identify the sections 730 and 731 in which the vocal cords of the user vibrate as sections in which the user utters, and may identify the remaining sections 740 and 741 as sections in which the user does not utter.

Returning to FIG. 5, according to an embodiment, in operation 540, the electronic device extracts the voice signal of the user included in the first audio signal, based on the voice of the user being included in the first audio signal, and may change the second audio signal using the voice signal of the user.

According to an embodiment, in operation 550, the electronic device identifies whether the front camera or the rear camera operates, and emphasizes the ambient audio signal included in the second audio signal or control the weight of the second audio signal based on whether the front camera or the rear camera operates. According to an embodiment, operation 540 and operation 550 are illustrated as sequentially performed in FIG. 5, but may be selectively performed depending on whether a user voice is included in the first audio signal.

According to an embodiment, the electronic device may extract the voice signal of the user included in the section in which the vocal cords are identified as vibrating in the audio signal obtained through the microphone of the external electronic device.

According to an embodiment, the electronic device may extract the user's voice by removing the audio signal of the second portion (e.g., 740 and 741 of FIG. 7) other than the first portion (e.g., 731 and 731 of FIG. 7) of the first audio signal (e.g., 710 of FIG. 7) from the first audio signal.

According to an embodiment, the electronic device may extract the user's voice by removing the audio signal obtained by the external microphone of the external electronic device from the first audio signal received from the external electronic device.

According to an embodiment, the electronic device may obtain the user voice signal and the ambient signal included in the audio signal, based on the following Equations (1) to (4).

$$A_{All} = = A_T + A_P \qquad\qquad \text{Equation (1)}$$

$A_{All}$ may refer to all the audio signals obtained through the external electronic device (e.g., TWS) and the microphone of the electronic device, $A_T$ may refer to the audio signal obtained through the external electronic device, and $A_P$ may refer to the audio signal obtained through the microphone of the electronic device.

$$A_T = A_{Ti} + A_{Te} \qquad\qquad \text{Equation (2)}$$

$A_{Ti}$ may be the audio signal obtained through the VPU and the internal microphone of the external electronic device, and $A_{Te}$ may be the audio signal obtained through the external microphone of the external electronic device. According to an embodiment, referring to Equation (2), the audio signal obtained through the external electronic device may be the sum of the audio signal obtained through the internal microphone of the external electronic device and the audio signal obtained through the external microphone of the external electronic device.

$$A_{user} = A_T - A_{Te} \qquad\qquad \text{Equation (3)}$$

$$A_{other} = A_{All} - A_{user} \qquad \text{Equation (4)}$$

$A_{user}$ may be the voice signal of the user wearing the external electronic device, and $A_{other}$ may be the ambient audio signal other than that of the user. According to an embodiment, referring to Equation (3), the voice signal of the user may be one obtained by removing the audio signal obtained through the external microphone of the external electronic device from the audio obtained from the external electronic device. According to an embodiment, referring to Equation (4), $A_{other}$ may be one obtained by removing the user voice signal from all the audio signals.

According to an embodiment, when the electronic device extracts the user voice from the first audio signal, the electronic device may intensify the user voice component in the first audio signal by performing an operation such as band width extension (BWE).

According to an embodiment, when the first audio signal does not include the user's voice, the electronic device may change the first audio signal and/or the second audio signal based on whether the front camera or the rear camera operates.

According to an embodiment, when the user's voice is included in the first audio signal, the electronic device may change the second audio signal to emphasize the user voice signal. According to an embodiment, when the user's voice is included in the first audio signal, the electronic device may change the second audio signal to emphasize the user voice signal in the section including the user's voice.

According to an embodiment, when the user's voice is included in the first audio signal, the electronic device may increase the weight of the first audio signal to be merged with the second audio signal to emphasize the user voice signal. According to an embodiment, when the user's voice is included in the first audio signal, the electronic device may increase the weight of the user voice signal extracted from the first audio signal to be merged with the second audio signal to emphasize the user voice signal.

According to an embodiment, when the user's voice is included in the first audio signal and the front camera operates, the electronic device may change the first audio signal and/or the second audio signal to emphasize the user voice signal. According to an embodiment, when the user's voice is included in the first audio signal and the rear camera operates, the electronic device may change the first audio signal and/or the second audio signal to emphasize the user voice signal.

According to an embodiment, the electronic device may increase the weight of the first audio signal to be merged with the second audio signal, based on the user's voice being included in the first audio signal.

According to an embodiment, the electronic device may change the second audio signal to emphasize the user voice signal by amplifying the signal of the user voice section obtained based on the VPU received from the external electronic device in the second audio signal.

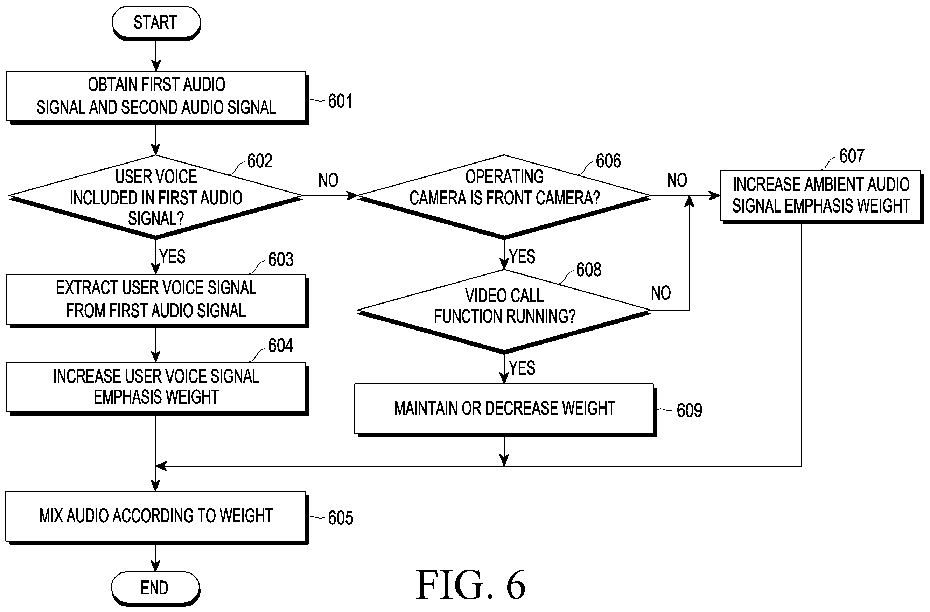

According to an embodiment, the operation in the section in which the user voice signal is included in the first audio signal received from the external electronic device is described in more detail with reference to FIGS. 6, 8, and 10.

According to an embodiment, the electronic device may increase the weight for the ambient audio signal included in the second audio signal, based on the user's voice not being included in the first audio signal and the front camera operating.

According to an embodiment, the electronic device may change the second audio signal to emphasize the ambient audio signal by amplifying the signal other than the user voice section obtained based on the VPU received from the external electronic device in the second audio signal.

According to an embodiment, the electronic device may emphasize the ambient audio signal by removing the user voice signal (e.g., $A_{user}$) extracted from the first audio signal from the audio signal (e.g., $A_{All}$) obtained by adding the audio signal obtained from the external electronic device and the audio signal obtained through the microphone of the electronic device.

According to an embodiment, the electronic device may emphasize the ambient audio signal by adding the section other than the user voice in the audio signal obtained through the microphone and the corresponding section (or the section that does not include the user voice) of the audio signal obtained from the external electronic device.

According to an embodiment, the electronic device may maintain or decrease the weight of the second audio signal based on the front camera operating and the user's voice being not included in the first audio signal as the video call function is performed. Therefore, the electronic device may provide a high-quality video call function by not intensifying the ambient sound even if the user does not utter during the video call.

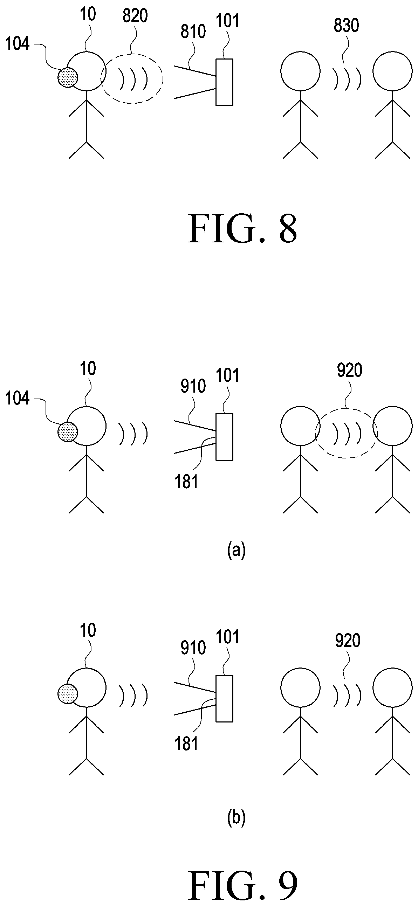

According to an embodiment, the operation in the section in which the user voice is not included in the first audio signal in a state in which the front camera of the electronic device operates is described in more detail with reference to FIGS. 6 and 9.

According to an embodiment, the electronic device may increase the weight for the ambient audio signal included in the second audio signal, based on the user's voice not being included in the first audio signal and the rear camera operating.

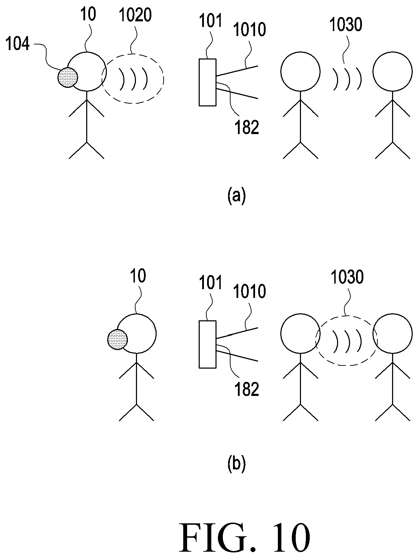

According to an embodiment, the operation in the section in which the user voice is not included in the first audio signal in a state in which the rear camera of the electronic device operates is described in more detail with reference to FIGS. 6 and 10.

According to an embodiment, the user may perform restoration when the audio signal is distorted in the operation of emphasizing the user's voice or the ambient audio signal. According to an embodiment, when the audio signal is distorted in the operation of emphasizing the user voice, the electronic device may restore the signal of a specific frequency range removed in the operation of extracting the user voice signal from the first audio signal through bandwidth extension (BWE).

According to an embodiment, when the audio signal is distorted in the operation of emphasizing the ambient audio signal, the electronic device may identify that distortion occurs in the first section of the first audio signal, based on the similarity or correlation of the frequencies over time of the first audio signal. For example, the electronic device may identify the similarity or correlation between channels in the frequency domain or in the time domain, of the audio signal of each of the first channel (e.g., the right channel) and the second channel (e.g., the left channel) of the external electronic device which is being recorded through BLE operation.

According to an embodiment, when the distortion occurs for only one channel, the electronic device may copy the audio signal of the other channel in which the distortion does not occur, and restore the audio signal of the channel in which the distortion occurs to the energy level of the channel in which the distortion occurs.

According to an embodiment, when both channels are distorted and need to be restored, restoration may be performed by performing packet loss concealment (PLC) logic embedded in the external electronic device (e.g., TWS).

According to an embodiment, the electronic device may restore the first section based on a section other than the first section. According to an embodiment, in the first audio signal, the audio signal is stored for each section of the buffer unit, and when distortion occurs in the audio signal of one buffer, the distorted audio signal may be restored based on the audio signal of the previous buffer.

According to an embodiment, the electronic device may identify that distortion occurs in the first section of the first audio signal based on the similarity or correlation in signal value over time between the audio signal obtained by merging the first audio signal obtained from the external electronic device and the second audio signal obtained through the microphone of the electronic device and the user voice signal extracted from the first audio signal. According to an embodiment, the electronic device may restore the first section based on a section other than the first section.

FIG. 6 is a flowchart illustrating an operation in which an electronic device processes an audio signal according to a condition according to an embodiment of the disclosure.

Referring to FIG. 6, in operation 601, an electronic device (e.g., the electronic device 101 of FIG. 1, the processor 120 of FIG. 1, or the electronic device 101 of FIG. 3) may obtain a first audio signal and a second audio signal.

According to an embodiment, the electronic device may receive the first audio signal from an external electronic device (e.g., the electronic device 104 of FIG. 1 or the external electronic devices 310 and 330 of FIG. 3). According to an embodiment, the operation of receiving the first audio signal of the electronic device is substantially the same as operation 510 of FIG. 5, and thus a duplicate description thereof is omitted. According to an embodiment, the electronic device may obtain the second audio signal through a microphone (e.g., the input module 150 of FIG. 1). According to an embodiment, the operation of obtaining the second audio signal of the electronic device is substantially the same as operation 520 of FIG. 5, and thus a duplicate description thereof is omitted.

According to an embodiment, in operation 602, the electronic device may identify whether the user voice is included in the first audio signal.

According to an embodiment, the electronic device may identify the first portion including the user's voice in the first audio signal obtained through the microphone of the external electronic device, based on the information detected by the acceleration sensor of the external electronic device.

According to an embodiment, the electronic device may identify whether the vocal cords of the user vibrate and the section in which the vocal cords of the user vibrate, based on the sensing value detected by the acceleration sensor of the external electronic device.

According to an embodiment, whether the user voice is included in the first audio signal is substantially the same as the description of operation 530 of FIG. 5 and FIG. 7, and thus a duplicate description thereof is omitted.

According to an embodiment, when it is identified that the first audio signal includes the user voice (Yes in operation 602), in operation 603, the electronic device may extract the user voice signal from the first audio signal.

According to an embodiment, the electronic device may extract the user's voice by removing the audio signal of the second portion (e.g., 740 and 741 of FIG. 7) other than the first portion (e.g., 731 and 731 of FIG. 7) identified as the section in which the user's vocal cords vibrate from the first audio signal.

According to an embodiment, the electronic device may extract the user's voice by removing the audio signal obtained by the external microphone of the external electronic device from the first audio signal received from the external electronic device.

According to an embodiment, in operation 604, the electronic device may increase the weight to emphasize the user voice signal. For example, the electronic device may increase the weight for the user voice signal included in the first audio signal and/or the user voice signal included in the second audio signal, based on the user voice being included in the first audio signal.

According to an embodiment, the electronic device may increase the weight of the voice signal of the user of the first audio signal to be merged with the second audio signal.

According to an embodiment, the electronic device may change the second audio signal to emphasize the user voice signal by amplifying the signal of the user voice section obtained based on the VPU received from the external electronic device in the second audio signal.

According to an embodiment, as illustrated in FIG. 8, when the user's voice is included in the first audio signal and the front camera operates, the electronic device may change the first audio signal and/or the second audio signal to emphasize the user voice signal.

FIG. 8 is a view illustrating an audio signal processing operation according to whether a user utters and whether a front/rear camera operates by an electronic device according to an embodiment of the disclosure.

Referring to FIG. 8, in a state in which the user 10 wearing the external electronic device 104 (e.g., TWS) activates (810) the front camera of the electronic device 101, the voice 820 of the user 10 and the ambient sound 830 may be obtained by the electronic device 101 and the external electronic device 104.

According to an embodiment, the electronic device 101 may change the weight for the section in which the voice 820 of the user 10 is identified in the first audio signal received from the external electronic device 104 to emphasize the voice 820 of the user 10, based on the information obtained by the VPU of the external electronic device 104.

According to an embodiment, as illustrated in FIG. 10, when the first audio signal includes the user's voice and the rear camera operates, the electronic device may change the second audio signal to emphasize the user voice signal.

FIG. 10 is a view illustrating an audio signal processing operation according to whether a user utters and whether a front/rear camera operates by an electronic device according to an embodiment of the disclosure.

Referring to FIG. 10(a), in a state in which the user 10 wearing the external electronic device 104 (e.g., TWS) activates (1010) the rear camera 182 of the electronic device 101, the voice 1020 of the user 10 and the ambient sound 1030 may be obtained by the electronic device 101 and the external electronic device 104.

According to an embodiment, the electronic device 101 may change the weight for the section in which the voice 1020 of the user 10 is identified in the first audio signal received from the external electronic device 104 to emphasize the voice 1020 of the user 10, based on the information obtained by the VPU of the external electronic device 104.

Returning to FIG. 6, according to an embodiment, in operation 605, the electronic device may mix the first audio signal and the second audio signal according to the weight.

According to an embodiment, the electronic device may mix the first audio signal and the second audio signal based on the weight changed to emphasize the user voice. For example, the electronic device may mix (or merge) the voice signal of the user extracted from the first audio signal obtained by the external electronic device with the second audio signal obtained through the microphone.

According to an embodiment, the electronic device may mix (or generate) audio in which the user voice signal has been emphasized by amplifying the signal of the user voice section obtained based on the VPU received from the external electronic device in the second audio signal obtained through the microphone.

According to an embodiment, when it is identified that the user voice is not included in the first audio signal (No in operation 602), in operation 606, the electronic device may identify whether the camera being operated is the front camera. For example, when the user voice is not included in the first audio signal while one of the front camera and the rear camera of the electronic device is being operated, the electronic device may identify whether the camera being operated is the front camera. According to an embodiment, when the front camera is not operating, the rear camera may be operating.

According to an embodiment, when the camera being operated is not the front camera (No in operation 606), the electronic device may identify that the camera being operated is the rear camera.

According to an embodiment, when the camera being operated is the rear camera, in operation 607, the electronic device may increase the weight to emphasize the ambient audio signal.

According to an embodiment, the electronic device may emphasize the ambient audio signal by amplifying a signal other than the user voice section obtained based on the VPU received from the external electronic device in the entire audio signal obtained through the microphone.

According to an embodiment, the electronic device may emphasize the audio signal by removing the user voice signal extracted from the audio signal obtained from the external electronic device from the audio signal obtained by adding the entire audio signal obtained from the external electronic device and the entire audio signal obtained through the microphone of the electronic device.

According to an embodiment, the electronic device may emphasize the ambient audio signal by adding a section other than the user voice in the entire audio signal obtained through the microphone and a corresponding section (or a section that does not include the user voice) of the audio signal obtained from the external electronic device.

According to an embodiment, as illustrated in FIG. 10, the electronic device may increase the weight for the ambient audio signal included in the second audio signal, based on the user's voice not being included in the first audio signal and the rear camera operating.

Referring to FIG. 10(b), in a state in which the user 10 wearing the external electronic device (e.g., TWS) activates (1010) the rear camera 182 of the electronic device 101, only the ambient sound 1030 may be obtained by the electronic device 101 and the external electronic device 104 without the voice of the user 10.

According to an embodiment, based on the information obtained by the VPU of the external electronic device, the electronic device 101 may change the weight for the section in which the voice of the user 10 is not identified in the audio signal received from the external electronic device to emphasizes the ambient sound 1030.

Returning to FIG. 6, according to an embodiment, the electronic device may proceed to operation 605 and mix audio according to the weight.

According to an embodiment, the electronic device may mix the audio based on the weight changed to emphasize the ambient sound. For example, the electronic device may mix (or merge) the second audio signal obtained through the microphone with the first audio signal obtained by the external electronic device.

According to an embodiment, the electronic device may mix (or generate) audio in which the ambient sound has been emphasized by amplifying a signal of a section other than the user voice section obtained based on the VPU received from the external electronic device in the second audio signal obtained through the microphone.

According to an embodiment, when the front camera among the cameras is operating (Yes in operation 606), in operation 608, the electronic device may identify whether a video call function is being performed.

According to an embodiment, when the video call function is not being performed (No in operation 608), the electronic device may proceed to operation 607 to increase the weight to emphasize the ambient audio signal.

According to an embodiment, as shown in FIG. 9, when the video call function is not being performed, the electronic device may increase the weight for the ambient audio signal included in the second audio signal based on the first audio signal not including the user's voice and the front camera operating.

FIG. 9 is a view illustrating an audio signal processing operation according to whether a user utters and whether a front/rear camera 181/182 operates by an electronic device according to an embodiment of the disclosure.

Referring to FIG. 9A, in a state in which the user 10 wearing the external electronic device 104 (e.g., TWS) activates (910) the front camera 181 of the electronic device 101, only the ambient sound 920 may be obtained by the electronic device 101 and the external electronic device 104 without the voice of the user 10.

According to an embodiment, based on the information obtained by the VPU of the external electronic device, the electronic device 101 may change the weight for the section in which the voice of the user 10 is not identified in the audio signal received from the external electronic device to emphasizes the ambient sound 920.

Returning to FIG. 6, according to an embodiment, the electronic device may proceed to operation 605 and mix audio according to the weight.

According to an embodiment, when the video call function is being performed (Yes in operation 608), in operation 609, the electronic device may maintain or decrease the weight of the second audio signal.

According to an embodiment, as illustrated in FIG. 9, the electronic device may maintain the second audio signal or decrease the weight of the second audio signal based on the front camera operating and the user's voice being not included in the first audio signal as the video call function is performed.

Referring to FIG. 9(b), in a state in which the user 10 wearing the external electronic device (e.g., TWS) activates (910) the front camera 181 of the electronic device 101 by performing the video call function, only the ambient sound 920 may be obtained by the electronic device 101 and the external electronic device without the voice of the user 10.

According to an embodiment, the electronic device 101 may maintain the weight of the second audio signal obtained by the electronic device 101. Therefore, the electronic device may provide a high-quality video call function by not intensifying the ambient sound even if the user does not utter during the video call.

Returning to FIG. 6, according to an embodiment, the electronic device may proceed to operation 605 and mix audio according to the weight.

According to an embodiment, the electronic device may store (e.g., record) the mixed audio in memory (e.g., the memory 130 of FIG. 1), may synchronize it with video and store (e.g., record) them in the memory (e.g., the memory 130 of FIG. 1), or may transmit (e.g., video call) it to the external electronic device.

As described above, it is possible to make a realistic recording or a phone call by separating and emphasizing the user voice or the ambient sound through the external electronic device TWS.

According to an embodiment, an electronic device (e.g., the electronic device 101 of FIG. 1) may comprise a front camera 181 (comprised in the camera module 180 of FIG. 1), a rear camera 182 (comprised in the camera module 180 of FIG. 1), a microphone (e.g., the input module 150 of FIG. 1), a communication module (e.g., the communication module 190 of FIG. 1) comprising communication circuitry, and at least one processor(e.g., the processor 120 of FIG. 1) comprising processing circuitry, and memory (e.g., the memory 130 of FIG. 1) storing instructions that, when executed by the at least one processor, cause the electronic device to perform operations below.

According to an embodiment, the instructions, when executed by the at least one processor, cause the electronic device to receive a first audio signal from an external electronic device through the communication module.

According to an embodiment, the instructions, when executed by the at least one processor, cause the electronic device to obtain a second audio signal through the microphone.

According to an embodiment, the instructions, when executed by the at least one processor, cause the electronic device to identify whether the first audio signal includes a voice of a user wearing the external electronic device.

According to an embodiment, the instructions, when executed by the at least one processor, cause the electronic device to, based on the voice of the user being included in the first audio signal, extract a voice signal of the user, included in the first audio signal.

According to an embodiment, the instructions, when executed by the at least one processor, cause the electronic device to, based on the voice of the user being included in the first audio signal, change the second audio signal using the voice signal of the user.

According to an embodiment, the instructions, when executed by the at least one processor, cause the electronic device to, based on the voice of the user being not included in the first audio signal, identify whether the front camera or the rear camera operates.

According to an embodiment, the instructions, when executed by the at least one processor, cause the electronic device to, based on an operation of the front camera or the rear camera, emphasize an ambient audio signal included in the second audio signal or control a weight of the second audio signal.

According to an embodiment, the instructions, when executed by the at least one processor, cause the electronic device to receive information, from the external electronic device, detected by an acceleration sensor of the external electronic device.

According to an embodiment, the instructions, when executed by the at least one processor, cause the electronic device to identify a first portion including the voice of the user in the first audio signal obtained through the microphone of the external electronic device, based on the information.

According to an embodiment, the instructions, when executed by the at least one processor, cause the electronic device to extract the voice of the user by removing an audio signal, of a second portion of the first audio signal other than the first portion, from the first audio signal.

According to an embodiment, the instructions, when executed by the at least one processor, cause the electronic device to increase a weight for a voice signal of the user included in the second audio signal, based on the voice of the user being included in the first audio signal.

According to an embodiment, the instructions, when executed by the at least one processor, cause the electronic device to increase the weight for the voice signal of the user included in the second audio signal by merging the voice signal of the user of the first audio signal with the second audio signal.

According to an embodiment, the instructions, when executed by the at least one processor, cause the electronic device to emphasize the ambient audio signal included in the second audio signal by merging the first audio signal with the second audio signal, based on the first audio signal not including the voice of the user and the rear camera operating.

According to an embodiment, the instructions, when executed by the at least one processor, cause the electronic device to reduce or maintain a weight of the second audio signal based on the first audio signal not including the voice of the user and the front camera operating as a video call function is performed.

According to an embodiment, the instructions, when executed by the at least one processor, cause the electronic device to identify that a distortion occurs in a first section of the first audio signal based on a similarity of frequencies over time of the first audio signal.

According to an embodiment, the instructions, when executed by the at least one processor, cause the electronic device to restore the first section based on a section of the first audio signal other than the first section.

According to an embodiment, the instructions, when executed by the at least one processor, cause the electronic device to synchronize the first audio signal and the second audio signal based on a delay generated by receiving of the first audio signal.

According to an embodiment, the external electronic device may include a true wireless stereo (TWS).

According to an embodiment, a method for controlling an electronic device may comprise receiving a first audio signal from an external electronic device through a communication module of the electronic device.

According to an embodiment, the method for controlling the electronic device may comprise obtaining a second audio signal through a microphone of the electronic device.

According to an embodiment, the method for controlling the electronic device may comprise identifying whether the first audio signal includes a voice of a user wearing the external electronic device.

According to an embodiment, the method for controlling the electronic device may comprise, based on the user's voice being included in the first audio signal, extracting the user's voice signal included in the first audio signal.

According to an embodiment, the method for controlling the electronic device may comprise, based on the user's voice being included in the first audio signal, changing the second audio signal using the user's voice signal.

According to an embodiment, the method for controlling the electronic device may comprise, based on the user's voice being not included in the first audio signal, identifying whether a front camera or a rear camera operates.

According to an embodiment, the method for controlling the electronic device may comprise, based on the user's voice being not included in the first audio signal, emphasizing an ambient audio signal included in the second audio signal or controlling a weight of the second audio signal based on an operation of the front camera or the rear camera.

According to an embodiment, the method for controlling the electronic device may further comprise receiving information, from the external electronic device, detected by an acceleration sensor of the external electronic device.

According to an embodiment, extracting the user's voice signal included in the first audio signal may include identifying a first portion including the voice of the user in the first audio signal obtained through the microphone of the external electronic device, based on the information.

According to an embodiment, extracting the user's voice signal included in the first audio signal may include extracting the voice of the user by removing an audio signal, of a second portion of the first audio signal other than the first portion, from the first audio signal.

According to an embodiment, emphasizing the ambient audio signal included in the second audio signal or controlling the weight of the second audio signal may include increasing a weight for a voice signal of the user included in the second audio signal, based on the voice of the user being included in the first audio signal.

According to an embodiment, emphasizing the ambient audio signal included in the second audio signal or controlling the weight of the second audio signal may include increasing the weight for the voice signal of the user included in the second audio signal by merging the voice signal of the user of the first audio signal with the second audio signal.

According to an embodiment, emphasizing the ambient audio signal included in the second audio signal or controlling the weight of the second audio signal may include emphasizing the ambient audio signal included in the second audio signal by merging the first audio signal with the second audio signal, based on the first audio signal not including the voice of the user and the rear camera operating.

According to an embodiment, emphasizing the ambient audio signal included in the second audio signal or controlling the weight of the second audio signal may include reducing or maintaining a weight of the second audio signal based on the first audio signal not including the voice of the user and the front camera operating as a video call function is performed.

According to an embodiment, the method for controlling the electronic device may further comprise, based on identifying that a distortion occurs in the first audio signal based on a similarity of frequencies over time of the first audio signal, restoring a section in which the distortion occurs in the first audio signal based on a section other than the section in which the distortion occurs in the first audio signal.

According to an embodiment, the method for controlling the electronic device may further comprise synchronizing the first audio signal and the second audio signal based on a delay generated by receiving of the first audio signal.

According to an embodiment, the external electronic device may include a true wireless stereo (TWS).

According to an embodiment, in a non-transitory computer-readable recording medium storing one or more programs, the one or more programs may store instructions enabling an electronic device to receive a first audio signal from an external electronic device through a communication module of the electronic device.

According to an embodiment, the one or more programs may store instructions enabling the electronic device to obtain a second audio signal through a microphone of the electronic device.

According to an embodiment, the one or more programs may store instructions enabling the electronic device to identify whether the first audio signal includes a voice of a user wearing the external electronic device.

According to an embodiment, the one or more programs may store instructions enabling the electronic device to, based on the voice of the user being included in the first audio signal, extract a voice signal of the user, included in the first audio signal.

According to an embodiment, the one or more programs may store instructions enabling the electronic device to, based on the voice of the user being included in the first audio signal, change the second audio signal using the voice signal of the user.

According to an embodiment, the one or more programs may store instructions enabling the electronic device to, based on the voice of the user being not included in the first audio signal, identify whether a front camera of the electronic device or a rear camera of the electronic device operates.

According to an embodiment, the one or more programs may store instructions enabling the electronic device to, based on the voice of the user being not included in the first audio signal, emphasize an ambient audio signal included in the second audio signal or control a weight of the second audio signal based on an operation of the front camera or the rear camera.

According to an embodiment, the one or more programs may store instructions enabling the electronic device to receive information, from the external electronic device, detected by an acceleration sensor of the external electronic device.

According to an embodiment, the one or more programs may store instructions enabling the electronic device to identify a first portion including the voice of the user in the first audio signal obtained through the microphone of the external electronic device, based on the information.

According to an embodiment, the one or more programs may store instructions enabling the electronic device to extract the voice of the user by removing an audio signal, of a second portion of the first audio signal other than the first portion, from the first audio signal.

According to an embodiment, the one or more programs may store instructions enabling the electronic device to receive information, from the external electronic device, detected by an acceleration sensor of the external electronic device.

According to an embodiment, the one or more programs may store instructions enabling the electronic device to identify a first portion including the voice of the user in the first audio signal obtained through the microphone of the external electronic device, based on the information.

According to an embodiment, the one or more programs may store instructions enabling the electronic device to extract the voice of the user by removing an audio signal, of a second portion of the first audio signal other than the first portion, from the first audio signal.

According to an embodiment, the one or more programs may store instructions enabling the electronic device to increase a weight for a voice signal of the user included in the second audio signal, based on the voice of the user being included in the first audio signal.

According to an embodiment, the one or more programs may store instructions enabling the electronic device to increase the weight for the voice signal of the user included in the second audio signal by merging the voice signal of the user of the first audio signal with the second audio signal.

According to an embodiment, the one or more programs may store instructions enabling the electronic device to emphasize the ambient audio signal included in the second audio signal by merging the first audio signal with the second audio signal, based on the first audio signal not including the voice of the user and the rear camera operating.

According to an embodiment, the one or more programs may store instructions enabling the electronic device to reduce or maintain a weight of the second audio signal based on the first audio signal not including the voice of the user and the front camera operating as a video call function is performed.

According to an embodiment, the one or more programs may store instructions enabling the electronic device to identify that a distortion occurs in a first section of the first audio signal based on a similarity of frequencies over time of the first audio signal.

According to an embodiment, the one or more programs may store instructions enabling the electronic device to restore the first section based on a section of the first audio signal other than the first section.

According to an embodiment, the one or more programs may store instructions enabling the electronic device to synchronize the first audio signal and the second audio signal based on a delay generated by receiving of the first audio signal.

According to an embodiment, the external electronic device may include a true wireless stereo (TWS).

The electronic device according to an embodiment may be one of various types of electronic devices. The electronic devices may include, for example, a portable communication device (e.g., a smartphone), a computer device, a portable multimedia device, a portable medical device, a camera, a wearable electronic device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1.  An electronic device (101,310), comprising:

    a front camera (181);
    a rear camera (182);
    a microphone (150);
    a communication module (190) comprising communication circuitry;
    at least one processor (120) comprising processing circuitry; and
    memory (130) storing instructions that, when executed by the at least one processor (120), cause the electronic device (101,310) to:

    receive a first audio signal from an external electronic device (102, 104, 108, 310, 330) through the communication module (190);
    obtain a second audio signal through the microphone (150);
    identify whether the first audio signal includes a voice of a user wearing the external electronic device (102, 104, 108, 310, 330);
    based on the voice (1020) of the user being included in the first audio signal, extract a voice signal of the user (10), included in the first audio signal, and change the second audio signal using the voice signal of the user (10); and
    based on the voice (1020) of the user (10) being not included in the first audio signal, identify whether the front camera (181) or the rear camera (182) operates and, based on an operation of the front camera (181) or the rear camera (182), emphasize an ambient audio signal included in the second audio signal or control a weight of the second audio signal.

2.  The electronic device of claim **1,**
    wherein the instructions, when executed by the at least one processor (120), cause the electronic device (101,310) to:

    receive information, from the external electronic device (102, 104, 108, 310, 330), detected by an acceleration sensor of the external electronic device (102, 104, 108, 310, 330);
    identify a first portion including the voice (1020) of the user (10) in the first audio signal obtained through the microphone (150) of the external electronic device (102, 104, 108, 310, 330), based on the information; and

extract the voice (1020) of the user (10) by removing an audio signal, of a second portion of the first audio signal other than the first portion, from the first audio signal.

3. The electronic device of claim 1 or 2,
wherein the instructions, when executed by the at least one processor (120), cause the electronic device to: increase a weight for a voice signal of the user (10) included in the second audio signal, based on the voice (1020) of the user (10) being included in the first audio signal.

4. The electronic device of claim 3,
wherein the instructions, when executed by the at least one processor (120), cause the electronic device (101,310) to: increase the weight for the voice signal of the user (10) included in the second audio signal by merging the voice signal of the user (10) of the first audio signal with the second audio signal.

5. The electronic device of any one of claims 1 to 4,
wherein the instructions, when executed by the at least one processor (120), cause the electronic device (101,310) to: emphasize the ambient audio signal included in the second audio signal by merging the first audio signal with the second audio signal, based on the first audio signal not including the voice (1020) of the user (10) and the rear camera (182) operating.

6. The electronic device of any one of claims 1 to 4,
wherein the instructions, when executed by the at least one processor (120), cause the electronic device (101,310) to: reduce or maintain a weight of the second audio signal based on the first audio signal not including the voice (1020) of the user (10) and the front camera (181) operating as a video call function is performed.

7. The electronic device of any one of claims 1 to 6,
wherein the instructions, when executed by the at least one processor (120), cause the electronic device (101,310) to:

identify that a distortion occurs in a first section of the first audio signal based on a similarity of frequencies over time of the first audio signal, and
restore the first section based on a section of the first audio signal other than the first section.

8. The electronic device of any one of claims 1 to 7,
wherein the instructions, when executed by the at least one processor (120), cause the electronic device (101,310) to: synchronize the first audio signal and the second audio signal based on a delay generated by receiving of the first audio signal.

9. The electronic device of any one of claims 1 to 8,
wherein the external electronic device (102, 104, 108, 310, 330) includes a true wireless stereo (TWS) function.

10. A method for controlling an electronic device (101, 310), the method comprising:

receiving (510) a first audio signal from an external electronic device (102, 104, 108, 310, 330) through a communication module (190) of the electronic device (101, 310);
obtaining (520) a second audio signal through a microphone (150) of the electronic device;
identifying (530) whether the first audio signal includes a voice (1020) of a user (10) wearing the external electronic device (102, 104, 108, 310, 330);
based on the user's voice (1020) being included in the first audio signal:

extracting (540) the user's voice signal included in the first audio signal; and
changing the second audio signal using the user's voice signal,
based on the user's voice (1020) being not included in the first audio signal:

identifying whether a front camera (181) or a rear camera (182) operates; and
emphasizing (550) an ambient audio signal included in the second audio signal or controlling a weight of the second audio signal based on an operation of the front camera (181) or the rear camera (182).

11. The method of claim 10, further comprising

receiving information, from the external electronic device (102, 104, 108, 310, 330), detected by an acceleration sensor of the external electronic device (102, 104, 108, 310, 330),
wherein extracting the user's voice signal included in the first audio signal includes:

identifying a first portion including the voice (1020) of the user (10) in the first audio signal obtained through the microphone (150) of the external electronic device (102, 104, 108, 310, 330), based on the information; and
extracting the voice (1020) of the user (10) by removing an audio signal, of a second portion of the first audio signal other than the first portion, from the first audio signal.

12. The method of claim 10 or 11,

wherein emphasizing the ambient audio signal included in the second audio signal or controlling the weight of the second audio signal includes
increasing a weight for a voice signal of the user (10) included in the second audio signal, based on the voice (1020) of the user (10) being included in the first audio signal.

13. The method of any one of claims 10 to 12,

wherein emphasizing the ambient audio signal included in the second audio signal or controlling the weight of the second audio signal includes
emphasizing the ambient audio signal included in the second audio signal by merging the first audio signal with the second audio signal, based on the first audio signal not including the voice (1020) of the user (10) and the rear camera (182) operating.

14. The method of any one of claims 10 to 12,

wherein emphasizing the ambient audio signal included in the second audio signal or controlling the weight of the second audio signal includes
reducing or maintaining a weight of the second audio signal based on the first audio signal not including the voice (1020) of the user (10) and the front camera (181) operating as a video call function is performed.

15. A non-transitory computer-readable recording medium storing one or more programs, the one or more programs storing instructions enabling an electronic device (101, 310) to:

receive a first audio signal from an external electronic device (102, 104, 108, 310, 330) through a communication module (190) of the electronic device (101, 310);
obtain a second audio signal through a microphone (150) of the electronic device (101, 310);
identify whether the first audio signal includes a voice (1020) of a user (10) wearing the external electronic device (102, 104, 108, 310, 330);
based on the voice (1020) of the user (10) being included in the first audio signal, extract a voice signal of the user (10), included in the first audio signal, and change the second audio signal using the voice signal of the user (10); and
based on the voice (1020) of the user (10) being not included in the first audio signal, identify whether a front camera (181) of the electronic device (101, 310) or a rear camera (182) of the electronic device (101, 310) operates and, based on an operation of the front camera (181) or the rear camera (182), emphasize an ambient audio signal included in the second audio signal or control a weight of the second audio signal.

FIG. 1

EP 4 583 534 A1

170

AUDIO MODULE

210
AUDIO INPUT INTERFACE

270
AUDIO OUTPUT INTERFACE

220
AUDIO INPUT MIXER

260
AUDIO OUTPUT MIXER

230
ADC

250
DAC

240
AUDIO SIGNAL PROCESSOR

# FIG. 2

FIG. 3

310

311
First sensor module

321
First communication module

313
First microphone

323
First processor

315
First speaker

325
First touch sensor

317
First charging module

327
First memory

319
First interface

329
First battery

330

331
Second sensor module

341
Second communication module

333
Second microphone

343
Second processor

335
Second speaker

345
Second touch sensor

337
Second charging module

347
Second memory

339
Second interface

349
Second battery

# FIG. 4

START

RECEIVE FIRST AUDIO SIGNAL FROM
EXTERNAL ELECTRONIC DEVICE — 510

OBTAIN SECOND AUDIO SIGNAL THROUGH MICROPHONE — 520

IDENTIFY WHETHER FIRST AUDIO SIGNAL INCLUDES VOICE
OF USER WEARING EXTERNAL ELECTRONIC DEVICE — 530

BASED ON USER VOICE BEING INCLUDED IN FIRST AUDIO
SIGNAL, EXTRACT USER'S VOICE SIGNAL INCLUDED IN
FIRST AUDIO SIGNAL AND CHANGE SECOND AUDIO
SIGNAL USING USER'S VOICE SIGNAL — 540

BASED ON USER VOICE BEING NOT INCLUDED IN
FIRST AUDIO SIGNAL, EMPHASIZE AMBIENT AUDIO SIGNAL
INCLUDED IN SECOND AUDIO SIGNAL OR CONTROL WEIGHT OF
SECOND AUDIO SIGNAL BASED ON OPERATION
OF FRONT CAMERA OR REAR CAMERA — 550

END

FIG. 5

FIG. 6

EP 4 583 534 A1

FIG. 7

FIG. 8

(a)

(b)

FIG. 9

(a)

(b)

FIG. 10

**TRANSLATION**

## INTERNATIONAL SEARCH REPORT

International application No.

**PCT/KR2024/016289**

### A.    CLASSIFICATION OF SUBJECT MATTER

**H04R 3/12**(2006.01)i; **H04R 5/04**(2006.01)i; **G10L 13/02**(2006.01)i; **H04M 1/02**(2006.01)i

According to International Patent Classification (IPC) or to both national classification and IPC

### B.    FIELDS SEARCHED

Minimum documentation searched (classification system followed by classification symbols)

H04R 3/12(2006.01); G10L 15/04(2006.01); G10L 17/24(2013.01); G10L 19/22(2013.01); G10L 21/0208(2013.01); G10L 25/78(2013.01); H04M 1/60(2006.01); H04R 3/00(2006.01); H04S 1/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이어폰(earphone), 오디오(audio), 음성(voice), 전면 카메라(front camera), 가중치(weight)

### C.    DOCUMENTS CONSIDERED TO BE RELEVANT

| Category* | Citation of document, with indication, where appropriate, of the relevant passages | Relevant to claim No. |
|---|---|---|
| A | KR 10-2022-0064017 A (SAMSUNG ELECTRONICS CO., LTD.) 18 May 2022 (2022-05-18)<br>See paragraphs [0015]-[0172]; claims 1-20; and figures 1-9. | 1-15 |
| A | KR 10-2020-0098323 A (SAMSUNG ELECTRONICS CO., LTD.) 20 August 2020 (2020-08-20)<br>See paragraphs [0011]-[0155]; claims 1-20; and figures 1-8. | 1-15 |
| A | KR 10-2022-0084902 A (SAMSUNG ELECTRONICS CO., LTD.) 21 June 2022 (2022-06-21)<br>See paragraphs [0017]-[0294]; claims 1-20; and figures 1-26. | 1-15 |
| A | US 2017-0188168 A1 (LYREN, Philip Scott et al.) 29 June 2017 (2017-06-29)<br>See paragraphs [0048]-[0308]; claims 1-20; and figures 1-20. | 1-15 |
| A | WO 2016-148955 A2 (BOSE CORPORATION) 22 September 2016 (2016-09-22)<br>See paragraphs [0017]-[0042]; claims 1-23; and figures 1A-11. | 1-15 |

☐ Further documents are listed in the continuation of Box C.          ☑ See patent family annex.

| | | "T" | later document published after the international filing date or priority date and not in conflict with the application but cited to understand the principle or theory underlying the invention |
|---|---|---|---|
| * | Special categories of cited documents: | | |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 February 2025** | **04 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/016289**

| Patent document cited in search report | | | Publication date (day/month/year) | Patent family member(s) | | | Publication date (day/month/year) |
|---|---|---|---|---|---|---|---|
| KR | 10-2022-0064017 | A | 18 May 2022 | US | 2023-0262386 | A1 | 17 August 2023 |
| | | | | WO | 2022-103176 | A1 | 19 May 2022 |
| KR | 10-2020-0098323 | A | 20 August 2020 | EP | 3906704 | A1 | 10 November 2021 |
| | | | | EP | 3906704 | A4 | 23 March 2022 |
| | | | | KR | 10-2565882 | B1 | 10 August 2023 |
| | | | | US | 11361785 | B2 | 14 June 2022 |
| | | | | US | 2020-0258539 | A1 | 13 August 2020 |
| | | | | WO | 2020-166944 | A1 | 20 August 2020 |
| KR | 10-2022-0084902 | A | 21 June 2022 | KR | 10-2740848 | B1 | 11 December 2024 |
| | | | | US | 12033628 | B2 | 09 July 2024 |
| | | | | US | 2022-0189477 | A1 | 16 June 2022 |
| | | | | WO | 2022-131533 | A1 | 23 June 2022 |
| US | 2017-0188168 | A1 | 29 June 2017 | US | 10080093 | B2 | 18 September 2018 |
| | | | | US | 10362421 | B1 | 23 July 2019 |
| | | | | US | 10368179 | B1 | 30 July 2019 |
| | | | | US | 10412519 | B1 | 10 September 2019 |
| | | | | US | 10440490 | B1 | 08 October 2019 |
| | | | | US | 10448184 | B1 | 15 October 2019 |
| | | | | US | 10499173 | B2 | 03 December 2019 |
| | | | | US | 10499174 | B1 | 03 December 2019 |
| | | | | US | 10659898 | B2 | 19 May 2020 |
| | | | | US | 10708703 | B1 | 07 July 2020 |
| | | | | US | 10873821 | B2 | 22 December 2020 |
| | | | | US | 11736880 | B2 | 22 August 2023 |
| | | | | US | 2017-0339503 | A1 | 23 November 2017 |
| | | | | US | 2018-0084359 | A1 | 22 March 2018 |
| | | | | US | 2019-0007776 | A1 | 03 January 2019 |
| | | | | US | 2019-0261120 | A1 | 22 August 2019 |
| | | | | US | 2019-0297442 | A1 | 26 September 2019 |
| | | | | US | 2019-0306647 | A1 | 03 October 2019 |
| | | | | US | 2019-0387341 | A1 | 19 December 2019 |
| | | | | US | 2020-0100042 | A1 | 26 March 2020 |
| | | | | US | 2020-0236486 | A1 | 23 July 2020 |
| | | | | US | 2020-0304930 | A1 | 24 September 2020 |
| | | | | US | 2021-0112357 | A1 | 15 April 2021 |
| | | | | US | 2022-0417687 | A1 | 29 December 2022 |
| | | | | US | 2023-0396945 | A1 | 07 December 2023 |
| | | | | US | 9749766 | B2 | 29 August 2017 |
| | | | | US | 9848271 | B2 | 19 December 2017 |
| WO | 2016-148955 | A2 | 22 September 2016 | CN | 107533838 | A | 02 January 2018 |
| | | | | CN | 107533838 | B | 11 December 2020 |
| | | | | EP | 3269149 | A2 | 17 January 2018 |
| | | | | EP | 3269149 | B1 | 02 January 2019 |
| | | | | JP | 2018-512794 | A | 17 May 2018 |
| | | | | JP | 2020-102867 | A | 02 July 2020 |
| | | | | JP | 6675414 | B2 | 01 April 2020 |
| | | | | JP | 7134192 | B2 | 09 September 2022 |
| | | | | US | 10192537 | B2 | 29 January 2019 |
| | | | | US | 10224016 | B2 | 05 March 2019 |
| | | | | US | 10839785 | B2 | 17 November 2020 |

Form PCT/ISA/210 (patent family annex) (July 2022)

**TRANSLATION**

### INTERNATIONAL SEARCH REPORT
**Information on patent family members**

International application No.

**PCT/KR2024/016289**

| Patent document cited in search report | Publication date (day/month/year) | Patent family member(s) | | | Publication date (day/month/year) |
|---|---|---|---|---|---|
| | | US | 11657793 | B2 | 23 May 2023 |
| | | US | 2016-0267899 | A1 | 15 September 2016 |
| | | US | 2018-0012584 | A1 | 11 January 2018 |
| | | US | 2018-0047381 | A1 | 15 February 2018 |
| | | US | 2019-0304429 | A1 | 03 October 2019 |
| | | US | 2021-0065673 | A1 | 04 March 2021 |
| | | US | 2023-0298555 | A1 | 21 September 2023 |
| | | US | 9905216 | B2 | 27 February 2018 |
| | | WO | 2016-148955 | A3 | 17 November 2016 |

Form PCT/ISA/210 (patent family annex) (July 2022)